# EUROPEAN PATENT APPLICATION

(11) **EP 4 311 417 A2**
(43) Date of publication of application: **31.01.2024**
(21) Application number: 23186822.5
(22) Date of filing: 20.07.2023
(51) Int. Cl.: A01D 34/00, G05D 1/00

(54) **INTERCONNECTING A VIRTUAL REALITY ENVIRONMENT WITH A ROBOTIC GARDEN TOOL**

(30) Priority: 27.07.2022 US 202263392644 P
(71) Applicant: Techtronic Cordless GP, Anderson, SC 29621 (US)
(72) Inventor: LAI, Hok Sum Sam, Kwai Chung (CN)
(74) Representative: Novagraaf Group

(57) **Abstract**

A communication system may include a robotic garden tool (105), a first external device (115), and a server device (150). The first external device (115) receives a user input of a selected lawn pattern, and generates, on a display of the first external device (115), a three-dimensional representation of a lawn surface based on the selected lawn pattern. The first external device (115) transmits the lawn pattern information corresponding to the selected lawn pattern to a server device (150) and to the robotic garden tool (105). The server device (150) transmits the lawn pattern information to a second external device (115). The robotic garden tool (105) receives the lawn pattern information from the first external device (115), and controls an operation of the robotic garden tool (105) on a real-world lawn based on the lawn pattern information to generate the selected lawn pattern on the real-world lawn.

## Description

### RELATED APPLICATIONS

This application claims priority to U.S. Provisional Application No. 63/392,644, filed on July 27, 2022 (Attorney Docket No.: 206737-9059-US01), the entire contents of which are hereby incorporated by reference.

### FIELD

Embodiments described herein relate to interconnecting a virtual reality environment with a robotic garden tool.

### SUMMARY

One embodiment includes a communication system that may include a robotic garden tool, a first external device, and a server device. The robotic garden tool may include a first electronic processor, a first memory, and a first network interface. The first external device may include a display, a second electronic processor, a second memory, and a second network interface. The second electronic processor may be configured to receive a user input of a selected lawn pattern. The second electronic processor may also be configured to generate, on the display of the first external device, a three-dimensional representation of a lawn surface based on the selected lawn pattern. The second electronic processor may also be configured to store, in the second memory, lawn pattern information corresponding to the selected lawn pattern. The second electronic processor may also be configured to transmit, via the second network interface, the lawn pattern information to a server device and to the robotic garden tool. The server device may include a third electronic processor, a third memory, and a third network interface. The third electronic processor may be configured to receive, via the third network interface, the lawn pattern information from the first external device. The third electronic processor may also be configured to store, with the third memory, the lawn pattern information. The third electronic processor may also be configured to transmit, with the third network interface, the lawn pattern information to a second external device. The first electronic processor of the robotic garden tool may be configured to receive, via the first network interface, the lawn pattern information from the first external device. The first electronic processor may also be configured to store the lawn pattern information in the first memory. The first electronic processor may also be configured to control an operation of the robotic garden tool on a real-world lawn based on the lawn pattern information to generate the selected lawn pattern on the real-world lawn.

In addition to any combination of features described above, the server device may transmit, via the third network interface, the lawn pattern information to the robotic garden tool.

In addition to any combination of features described above, the operation of the robotic garden tool may include at least one of a cutting blade height, a cutting blade speed, a cutting blade sheer angle, a traverse speed, a travel distance, a travel path, and combinations thereof.

In addition to any combination of features described above, the user input may at least one of: select the selected lawn pattern from a plurality of predetermined lawn patterns, and generate the selected lawn pattern. In addition to any combination of features described above, the selected lawn pattern may include a user-customized lawn pattern.

In addition to any combination of features described above, the lawn pattern information corresponding to the selected lawn pattern may include a predetermined travel path of the robotic garden tool.

In addition to any combination of features described above, the predetermined travel path of the robotic garden tool may include at least one of repeated horizontal lines, repeated vertical lines, repeated diagonal lines, and circular movement with a gradually increasing radius.

In addition to any combination of features described above, the lawn pattern information may indicate that the operation of the robotic garden tool should change at one or more points along the predetermined travel path.

In addition to any combination of features described above, the first external device may be associated with and operated by a first user, and the second external device may be associated with and operated by a second user different than the first user. In addition to any combination of features described above, the second external device may be configured to display, on a second display of the second external device and based on the lawn pattern information, the three-dimensional representation of the lawn surface corresponding to the selected lawn pattern selected on the first external device by the first user.

In addition to any combination of features described above, the three-dimensional representation of the lawn surface displayed on the second display of the second external device may be displayed in a virtual reality environment.

Another embodiment includes a method of controlling operation of a robotic garden tool. The method may include receiving, with a first external device, a user input of a selected lawn pattern. The method may also include generating, on a display of the first external device and with a second electronic processor of the first external device, a three-dimensional representation of a lawn surface based on the selected lawn pattern. The method may also include storing, in a second memory of the first external device, lawn pattern information corresponding to the selected lawn pattern. The method may also include transmitting, via a second network of the first external device, the lawn pattern information to a server device and to the robotic garden tool. The method may also include receiving, via a third network interface of the server device, the lawn pattern information. The method may also include storing, in a third memory of the server device, the lawn pattern information. The method may also include transmitting, via the third network interface of the server device, the lawn pattern information to a second external device. The method may also include receiving, via a first network interface of the robotic garden tool, the lawn pattern information. The method may also include storing the lawn pattern information in a first memory of the robotic garden tool. The method may also include controlling, by a first electronic processor of the robotic garden tool, an operation of the robotic garden tool on a real-world lawn based on the lawn pattern information to generate the selected lawn pattern on the real-world lawn.

In addition to any combination of features described above, the method may include transmitting, via the third network interface of the server device, the lawn pattern information to the robotic garden tool.

In addition to any combination of features described above, controlling the operation of the robotic garden tool may include controlling at least one of a cutting blade height, a cutting blade speed, a cutting blade sheer angle, a traverse speed, a travel distance, a travel path, and combinations thereof.

In addition to any combination of features described above, receiving the user input of the selected lawn pattern may include at least one of receiving the selected lawn pattern from a plurality of predetermined lawn patterns, and generating, with the second electronic processor, the selected lawn pattern based on the user input. In addition to any combination of features described above, the selected lawn pattern may include a user-customized lawn pattern.

In addition to any combination of features described above, the lawn pattern information corresponding to the selected lawn pattern may include a predetermined travel path of the robotic garden tool.

In addition to any combination of features described above, the predetermined travel path of the robotic garden tool may include at least one of repeated horizontal lines, repeated vertical lines, repeated diagonal lines, and circular movement with a gradually increasing radius.

In addition to any combination of features described above, the lawn pattern information may indicate that the operation of the robotic garden tool should change at one or more points along the predetermined travel path.

In addition to any combination of features described above, the first external device may be associated with and operated by a first user, and the second external device may be associated with and operated by a second user different than the first user. In addition to any combination of features described above, the method may include displaying, on a second display of the second external device and based on the lawn pattern information, the three-dimensional representation of the lawn surface corresponding to the selected lawn pattern selected on the first external device by the first user.

In addition to any combination of features described above, the three-dimensional representation of the lawn surface displayed on the second display of the second external device may be displayed in a virtual reality environment.

Another embodiment includes a communication system that may include a robotic garden tool and a first external device. The robotic garden tool may include a first electronic processor, a first memory, and a first network interface. The first external device may include a display, a second electronic processor, a second memory, and a second network interface. The second electronic processor may be configured to receive a user input of a selected lawn pattern. The second electronic processor may also be configured to generate, on the display of the first external device, a three-dimensional representation of a lawn surface based on the selected lawn pattern. The second electronic processor may also be configured to store, in the second memory, lawn pattern information corresponding to the selected lawn pattern. The second electronic processor may also be configured to transmit, via the second network interface, the lawn pattern information to the robotic garden tool. The first electronic processor of the robotic garden tool may be configured to receive, via the first network interface, the lawn pattern information from the first external device. The first electronic processor of the robotic garden tool may also be configured to store the lawn pattern information in the first memory. The first electronic processor of the robotic garden tool may be configured to control an operation of the robotic garden tool on a real-world lawn based on the lawn pattern information to generate the selected lawn pattern on the real-world lawn.

In addition to any combination of features described above, the communication system may include a server device that may include a third electronic processor, a third memory, and a third network interface. In addition to any combination of features described above, the second electronic processor of the first external device may be configured to transmit, via the second network interface, the lawn pattern information to the server device. In addition to any combination of features described above, the third electronic processor of the server device may be configured to transmit, via the third network interface, the lawn pattern information to a second external device for display of the three-dimensional representation of the lawn surface including the selected lawn pattern based on the lawn pattern information.

Other aspects, features, and embodiments will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of an external device of FIG. 1A according to some example embodiments.
FIG. 4 is a block diagram of a server device of FIG. 1A according to some example embodiments.
FIGS. 5A-5B illustrate a flowchart of a method to attempt to match a lawn pattern of a real-world lawn with a lawn pattern of a virtual reality lawn according to some example embodiments.
FIGS. 6A and 6B illustrate example virtual lawn surfaces according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting, and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

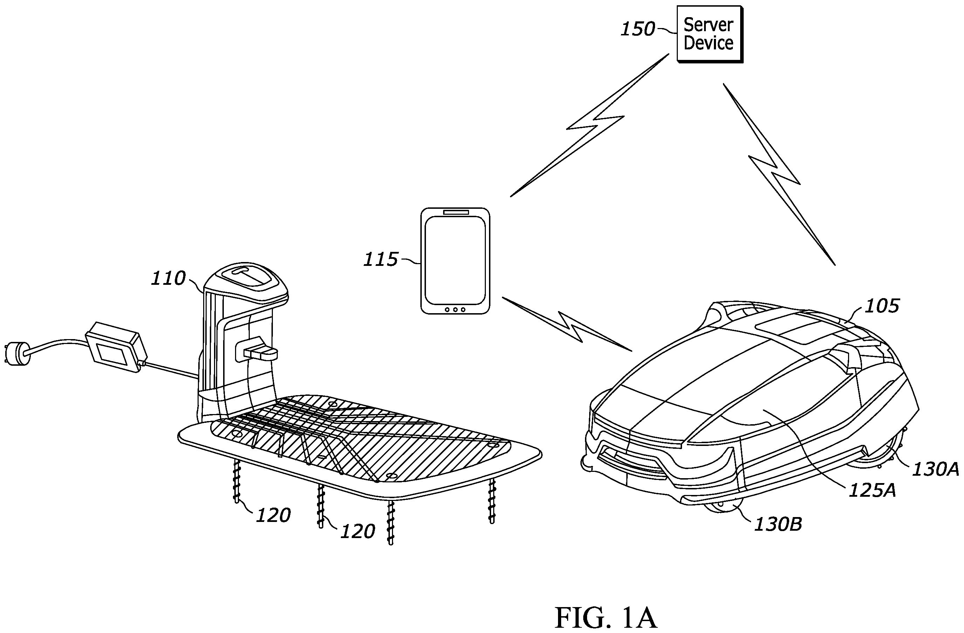

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, and a server device 150 according to some example embodiments. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc. In yet other embodiments, the robotic garden tool 105 may include a device for distributing a substance. For example, the robotic garden tool 105 may distribute fertilizer, paint (e.g., spray paint), chalk, or another substance on a lawn or other surface.

In some embodiments, a lawn may include any type of property that includes grass, a crop, some other material to be trimmed, cleared, gathered, etc., and/or that includes some material to receive treatment from the robotic garden tool 105 (e.g., fertilizer to treat grass in the lawn). In some embodiments, a lawn may include paved portions of a property (e.g., a driveway), for example, when the robotic garden tool 105 is used for snow plowing/removal or when the robotic garden tool 105 is used to paint a paved surface.

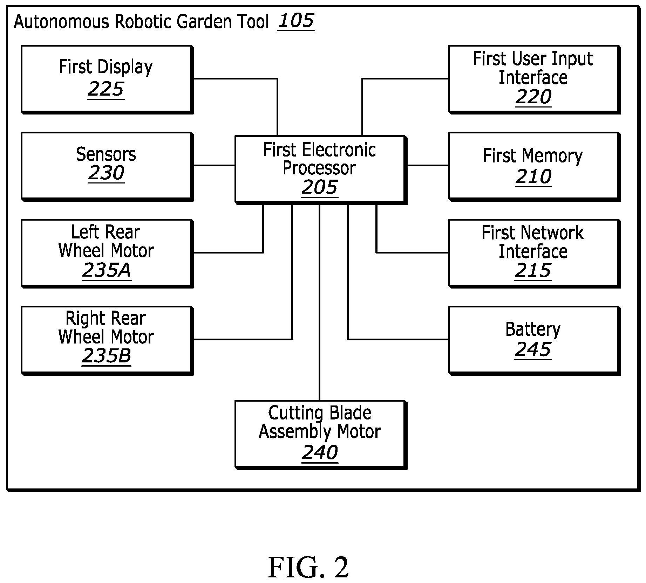

In some embodiments, the docking station 110 may be installed in a worksite using stakes 120. The robotic garden tool 105 may be configured to mow a yard and dock at the docking station 110 in order to charge a battery pack 245 of the robotic garden tool 105 (see FIGS. 2A and 2B). In some embodiments, the docking station 110 is configured to make an electrical connection with a power supply (e.g., via a cord and plug connected to a wall outlet that is connected to a power grid) in order to provide charging current to the robotic garden tool 105 when the robotic garden tool 105 is electrically coupled with the docking station 110. In some embodiments, the battery pack 245 is a removable, rechargeable battery pack configured to be charged at a charging device/charger while a second removable, rechargeable battery pack is used with the robotic garden tool 105.

As indicated in FIG. 1A, in some embodiments, the robotic garden tool 105 is configured to bidirectionally wirelessly communicate with the external device 115, the docking station 110, and/or the server device 150. In some embodiments, the robotic garden tool 105 is configured to directly communicate with the external device 115 when the robotic garden tool 105 is within communication range of the external device 115 (e.g., via Bluetooth^{™}, WiFi^{™}, or the like). In some embodiments, the robotic garden tool 105 is additionally or alternatively configured to communicate with the external device 115 via an intermediary device such as a cellular communication tower/base station, another device in a cellular network, or the like (e.g., when the robotic garden tool 105 is outside of direct communication range with the external device 115). In some embodiments, the robotic garden tool 105 is configured to communicate similarly with the server device 150. The external device 115 may be, for example, a smart phone (as illustrated), a laptop computer, a desktop computer, a tablet computer, a personal digital assistant (PDA), a wireless communication router that allows another external device 115 that is located remotely from the robotic garden tool 105 to communicate with the robotic garden tool 105, or another electronic device capable of communicating with the robotic garden tool 105. In some embodiments, the external device 115 includes a head-mounted display that displays a virtual reality environment, an augmented reality environment, and/or the like. The server device 150 may be, for example, a cloud computing repository, a database, a blockchain network, or any other type of network capable of receiving, transmitting, and storing data. In some embodiments, the server device 150 stores data associated with a virtual reality environment. When such data is provided to one or more external devices 115, the external devices 115 may display information such that a virtual reality world/environment is viewable by a user of each respective external device 115. In some instances, the virtual reality environment may be based on (e.g., may mimic) properties and/or items in the real world as explained in greater detail below.

Also as described in greater detail below, in some embodiments, the external device 115 is configured to generate a three-dimensional graphical representation of a work surface, such as a lawn that corresponds to a real-world lawn. The external device 115 may also be configured to communicate with the robotic garden tool 105 to enable or disable certain features/operations of the robotic garden tool 105 in accordance with instructions received via a user input (e.g., lawn pattern information corresponding to a selected lawn pattern that indicates how the robotic garden tool 105 should perform an operation). The external device 115 may also be configured to transmit the lawn pattern information to the server device 150 as explained in greater detail below. In some embodiments, the communication between the external device 115 and the robotic garden tool 105 may be wired (e.g., via a Universal Serial Bus (USB) cord configured to connect to respective USB ports of the external device 115 and the robotic garden tool 105). The external device 115 is further configured to communicate with the server device 150, in a wired and/or wireless manner.

Also as indicated in FIG. 1A, in some embodiments, the external device 115 is configured to bidirectionally communicate with the robotic garden tool 105, the docking station 110, and/or the server device 150. In some embodiments, the docking station 110 may also be configured to bidirectionally communicate with any one or a combination of the robotic garden tool 105, the external device 115, and the server device 150.

While FIG. 1A illustrates one robotic garden tool 105, one charging station 110, one external device 115, and one server device 150, in some embodiments, the communication system 100 includes additional robotic garden tools 105, charging stations 110, external devices 115, and/or server devices 150. In some embodiments, a single external device 115 may be configured to communicate with multiple robotic garden tools 105. In some embodiments, external devices 115 of different users may be configured to display a representation of the same virtual reality world/environment using data received from the server device 150.

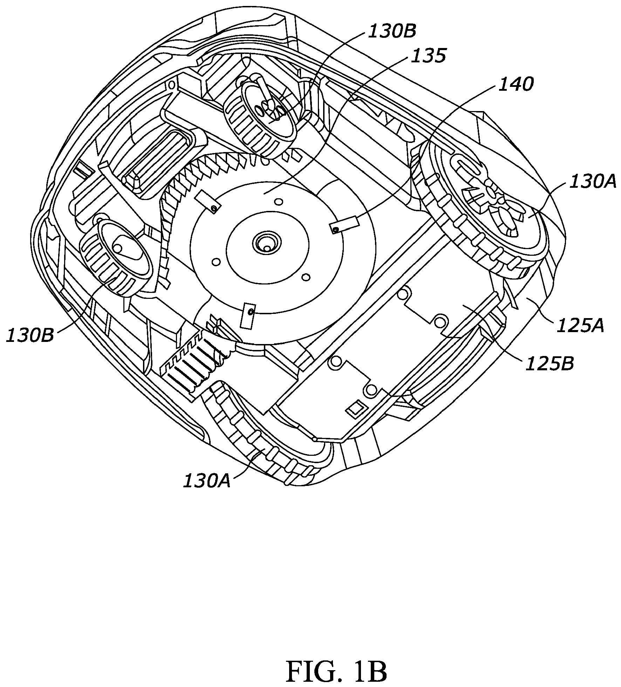

FIG. 1B illustrates a bottom perspective view of the robotic garden tool 105 according to some example embodiments. The robotic garden tool 105 may include a housing 125 that includes an outer housing 125A (i.e., outer housing shell) and an inner housing 125B. The outer housing 125A may be coupled to the inner housing 125B. The robotic garden tool 105 also may include wheels 130 (i.e., a set of wheels 130) coupled to the inner housing 125B and configured to rotate with respect to the housing 125 to propel the robotic garden tool 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic garden tool 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic garden tool 105 includes a wheel motor 235 (see FIG. 2) coupled to one or more wheels 130 and configured to drive rotation of the one or more wheels 130. In some embodiments, the robotic garden tool 105 includes multiple wheel motors 235 where each wheel motor 235 is configured to drive rotation of a respective motor-driven wheel 130A (see FIG. 2).

In some embodiments, the robotic garden tool 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic garden tool 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic garden tool 105 and/or the docking station 110 include additional components and functionality than is shown and described herein. For example, the robotic garden tool 105 and/or the docking station 110 may include components and/or functionality described in PCT Application No. PCT/CN2017/091129, filed June 30, 2017, which has published as International Publication No. WO 2018/001358, the entire contents of which are hereby incorporated by reference and appended herein with related replacement black-and-white line drawings filed in related U.S. Application No. 16/312,236 that claims priority to PCT Application No. PCT/CN2017/091129.

FIG. 2 is a block diagram of the robotic garden tool 105 according to some example embodiments. In the embodiment illustrated, the robotic garden tool 105 includes a first electronic processor 205 (for example, a microprocessor or other electronic device). The first electronic processor 205 includes input and output interfaces (not shown) and is electrically coupled to a first memory 210, a first network interface 215, an optional first user input device 220, an optional display 225, one or more sensors 230, a left rear wheel motor 23 5A, a right rear wheel motor 23 5B, a cutting blade assembly motor 240, and a battery 245 (e.g., a battery pack 245). In some embodiments, the robotic garden tool 105 includes fewer or additional components in configurations different from that illustrated in FIG. 2. For example, the robotic garden tool 105 may not include the first user input device 220 and/or the first optional display 225. As another example, the robotic garden tool 105 may include a height adjustment motor configured to adjust a height of the cutting blade assembly 135 (e.g., as described in PCT Application No. PCT/CN2017/091129). As yet another example, the robotic garden tool 105 may include additional sensors or fewer sensors than the sensors 230 described herein. In some embodiments, the robotic garden tool 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the docking station 110, the external device 115, the server device 150, etc.). In some embodiments, the first network interface 215 includes one or more transceivers for wirelessly communicating with the external device 115 and/or the docking station 110 (e.g., a first radio frequency (RF) transceiver configured to communicate via Bluetooth^{™}, WiFi^{™}, or the like). The first network interface 215 may include an additional transceiver for wirelessly communicating with the server device 150 (and/or the external device 115 and/or the docking station 110) via, for example, cellular communication. In some embodiments, at least some of the transceivers and/or receivers of the robotic garden tool 105 may be combined or share some elements (e.g., an antenna and/or other hardware). Alternatively or additionally, the first network interface 215 may include a connector or port for receiving a wired connection to the external device 115, such as USB cable. In some embodiments, the robotic garden tool 105 may additionally or alternatively communicate with the docking station 110 when the robotic garden tool 105 is docked/coupled to the docking station 110 (e.g., via first terminals of the robotic garden tool 105 that are connected to second terminals of the docking station 110).

The first user input device 220 is configured to allow the first electronic processor 205 to receive a user input from a user to, for example, set/adjust an operational parameter of the robotic garden tool 105. The first display 225 is configured to display a user interface to the user. Similar to the user interface of the external device 115 described previously herein, the user interface displayed on the first display 225 may allow the user to access and interact with robotic garden tool information. In some embodiments, the first display 225 may also act as the first user input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, as described below, the first display 225 may be configured to display a progress map illustrating work progress. For example, when the robotic garden tool 105 is mowing a lawn, the first display 225 may illustrate a map of a selected lawn pattern, a percentage complete progress, a remaining time indicator, and/or the like. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, current sensors, other magnetic sensors, and/or the like. In some embodiments, data from one or more Hall sensors may be used by the first electronic processor 205 to determine how fast the a motor of the robotic garden tool 105 is rotating.

In some embodiments, the battery pack 245 provides power to the first electronic processor 205 and to other components of the robotic garden tool 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery pack 245 to the other components, the first electronic processor 205 may control whether power is provided to one or more of the other components using, for example, a respective switch (e.g., a field-effect transistor) or a respective switching network including multiple switches. For example, the first electronic processor 205 may control whether current from the battery pack 245 is provided to a motor of the robotic garden tool 105. In some embodiments, the robotic garden tool 105 includes active and/or passive conditioning circuitry (e.g., voltage step-down controllers, voltage converters, rectifiers, filters, etc.) to regulate or control the power received by the components of the robotic garden tool 105 (e.g., the first electronic processor 205, the motors, 235A, 235B, 240, etc.) from the battery pack 245. In some embodiments, the battery pack 245 is a removable battery pack. In some embodiments, the battery pack 245 is configured to receive charging current from the docking station 110 when the robotic garden tool 105 is docked at the docking station 110 and electrically connected thereto.

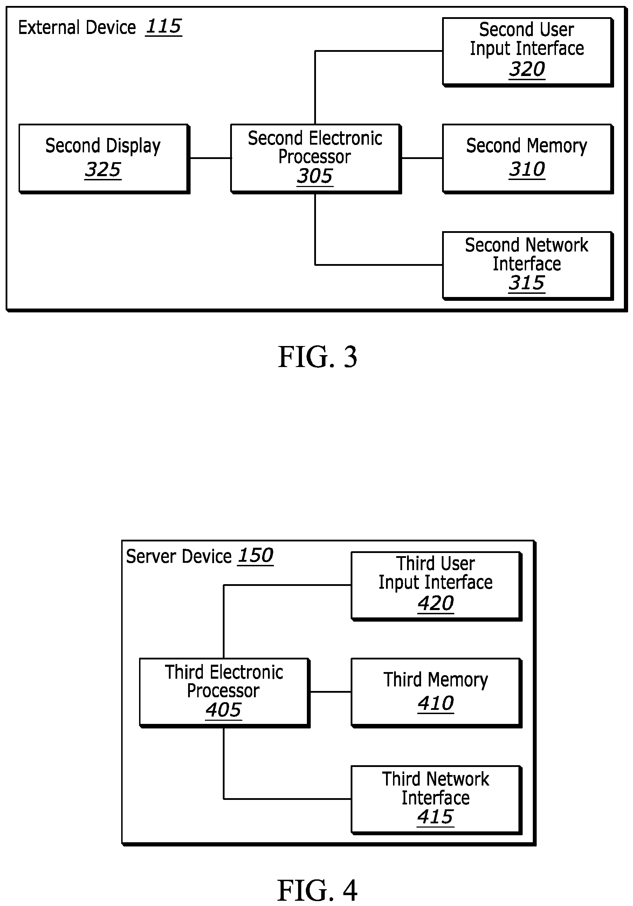

FIG. 3 is a block diagram of the external device 115 according to some example embodiments. In the example shown, the external device 115 includes a second electronic processor 305 electrically connected to a second memory 310, a second network interface 315, a second user input device 320, and a second display 325. These components are similar to the like-named components of the robotic garden tool 105 explained above with respect to FIG. 2 and function in a similar manner as described above. For example, the second display 325 may also function as an input device (e.g., when the second display 325 is a touchscreen). In some embodiments, the second electronic processor 305 sends data to and receives data from the robotic garden tool 105 and/or the server device 150 via the second network interface 315. In some embodiments, the second network interface 315 includes one or more transceivers for wirelessly communicating with the robotic garden tool 105 (e.g., a second RF transceiver configured to communicate via Bluetooth^{™}, WiFi^{™}, or the like). The second network interface 315 may include an additional transceiver for wirelessly communicating with the server device 150 via, for example, cellular communication. In some embodiments, at least some of the transceivers and/or receivers of the external device 115 may be combined or share some elements (e.g., an antenna and/or other hardware). In some embodiments, the external device 115 includes fewer or additional components in configurations different from that illustrated in FIG. 3. For example, the external device 115 may include a battery, a global positioning system (GPS) device, or the like. As another example, when the external device 115 is a head-mounted display, the external device 115 may additionally include one or more cameras, one or more projectors, one or more lenses, and/or the like to allow the external device 115 to monitor the environment around a user and/or render/display a virtual reality environment and/or an augmented reality environment to the user. In some embodiments, the external device 115 performs functionality other than the functionality described below.

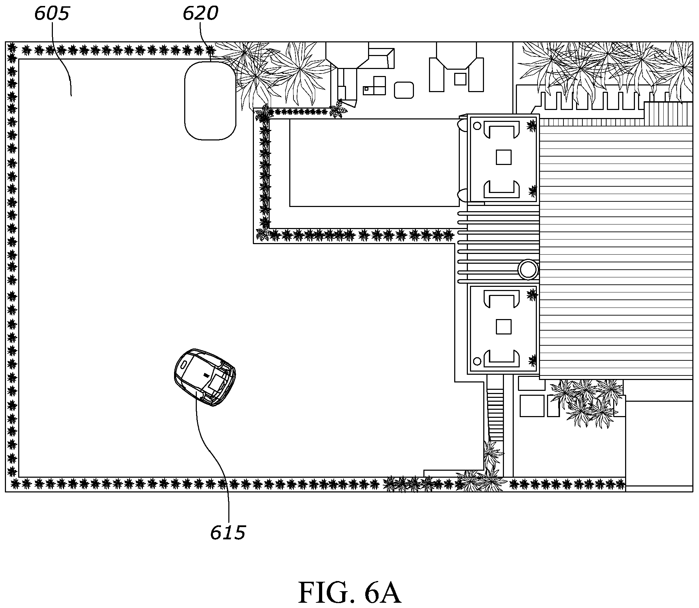

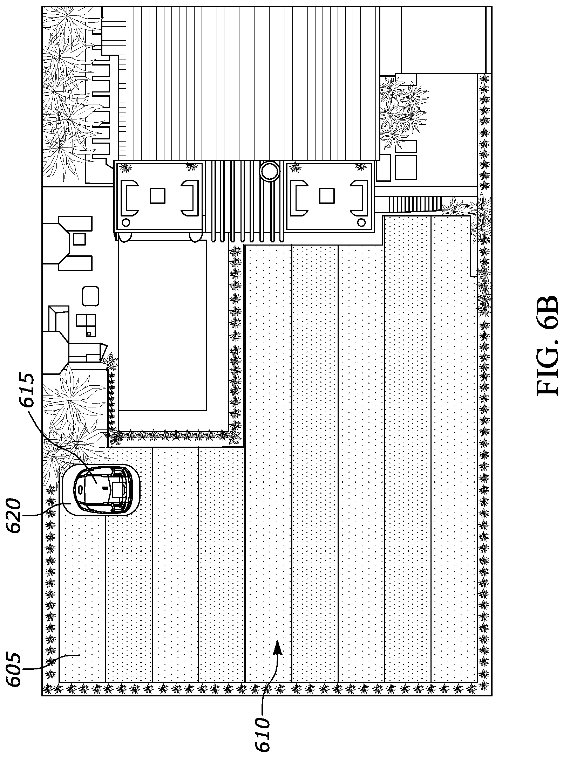

As explained in greater detail below, the external device 115 may be configured to generate a three-dimensional representation of a lawn surface, also referred to as a virtual lawn surface 605, on the second display 325 (see FIGS. 6A and 6B). In some embodiments, the external device 115 is configured to transmit, via the second network interface 315, lawn pattern information corresponding to a selected lawn pattern shown on the three-dimensional representation of the lawn surface to the robotic garden tool 105 and/or to the server device 150 as explained in greater detail below.

FIG. 4 is a block diagram of the server device 150 according to some example embodiments. In the example shown, the server device 150 includes a third electronic processor 405 electrically connected to a third memory 410, a third network interface 415, and a third user input device 420. These components are similar to the like-named components of the robotic garden tool 105 explained above with respect to FIG. 2 and function in a similar manner as described above. The server device 150 may be one of multiple server devices 150 in a network, connected to each other and/or to other devices (e.g., external devices 115 and robotic garden tools 105) via their respective third network interface 415. In some examples, the server device 150 is configured to store data that allows for a rendering of a virtual reality world/environment, such as Metaverse^{™}, or a video game service such as Roblox^{™}, Second Life^{™}, Fortnite^{™}, or the like. In some examples, the server device 150 may be connected to a blockchain network. For example, server device 150 may be connected to a blockchain metaverse project such as Decentraland^{™}, Enjin^{™}, Sandbox^{™}, or the like. In some examples, the server device 150 communicates with the external device 115, and is configured to receive lawn pattern information including a user selection of one lawn pattern among a plurality of customized lawn patterns. The server device 150 is further configured to store the lawn pattern information in the third memory 410. The server device 150 is also configured to transmit the lawn pattern information, for example, to the robotic garden tool 105 and/or to other external devices 115.

In some embodiments, the robotic garden tool 105 travels within a virtual boundary of the operating area to execute a task (e.g., mowing a lawn). The virtual boundary may be defined by a boundary wire or may be programmed into the robotic garden tool 105, for example, by storing map data with location coordinates. The robotic garden tool 105 may travel randomly within the operating area defined by the virtual boundary. In some embodiments, the robotic garden tool 105 may travel in a predetermined pattern within the operating area defined by the virtual boundary (e.g., in adjacent rows or columns between sides of the virtual boundary) to more efficiently and evenly mow the lawn within the operating area. In such embodiments, the robotic garden tool 105 may determine and keep track of its current location within the operating area, for example using odometry, location tracking of itself, and/or the like. For example, the robotic garden tool 105 may use a speedometer to measure a mower speed such that the robotic garden tool 105 maintains a set speed. In another example, the robotic garden tool 105 may use an odometer to measure the travel distance in order to follow a predetermined travel path from a known starting location such as the docking station 110. In another example, the robotic garden tool 105 may use a position sensor, such as a GPS device, to follow the predetermined travel path by matching location coordinates of the robotic garden tool 105 with location coordinates along the predetermined travel path. The robotic garden tool 105 may include a compass device to determine cardinal direction. The robotic garden tool 105 may also be pre-programmed with a map of the lawn or may execute a "map mode" in order to generate a map of the lawn.

In recent years, virtual reality worlds/environments have become increasingly popular. For example, a virtual reality world may include three-dimensional depictions/representations of real-world objects and/or properties such as a home, yard, etc. In some circumstances, it may be desirable to maintain a similar visual appearance of a location in the real-world (e.g., a first user's home and lawn) and the same location in a virtual reality world.

The systems, methods, and devices described herein aim to control a robotic garden tool 105 in the real-world at a real-world location in a manner that will produce a similar lawn pattern as a lawn pattern shown in a virtual reality world at a virtual reality location corresponding to the real-world location. For example, the systems, methods, and devices described herein aim to match a real-world lawn pattern with a virtual reality lawn pattern selected by a user for their lawn in the virtual reality world.

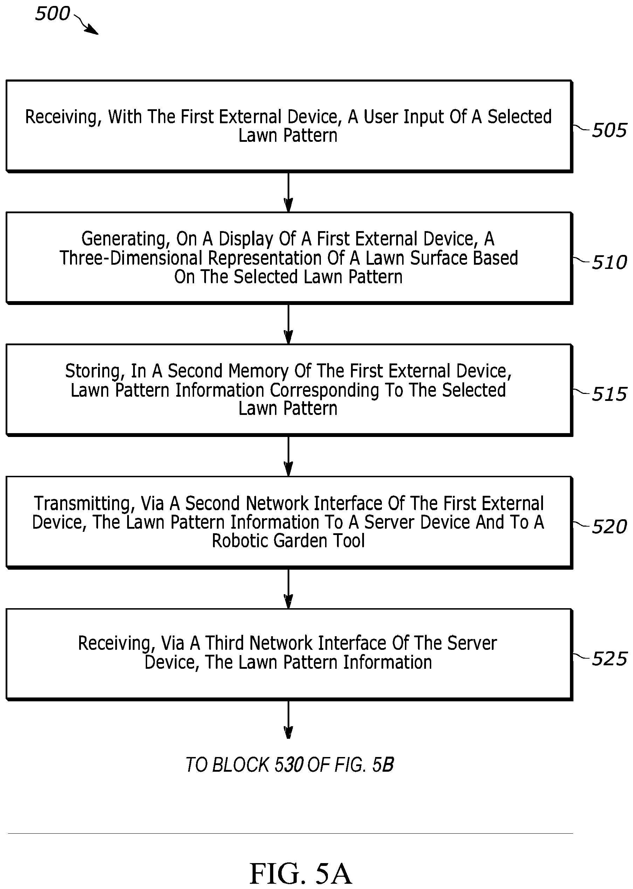

FIGS. 5A-5B is a illustrate a flowchart of a method 500 that may be performed by the robotic garden tool 105, the external device 115, and/or the server device 150 to attempt to match a lawn pattern of a real-world lawn with a lawn pattern of a virtual reality lawn according to some example embodiments. While a particular order of processing steps, signal receptions, and/or signal transmissions is indicated in FIGS. 5A-5B as an example, timing and ordering of such steps, receptions, and transmissions may vary where appropriate without negating the purpose and advantages of the examples set forth in detail throughout the remainder of this disclosure. While the method 500 includes at least some actions that may be performed by each of the robotic garden tool 105, the external device 115, and the server device 150 depending on the implementation, it should be understood that separate methods may be performed by only one of these devices 105, 115, 150 where these separate methods include only the blocks executed by the respective device 105, 115, 150.

In some instances, before the method 500 begins or as a preliminary step of the method 500, the second electronic processor 305 of the first external device 115 may generate on the second display 325 of the first external device 115 a three-dimensional representation (or alternatively, a two-dimensional representation 605 as shown in FIG. 6A) of a lawn surface in a virtual reality environment. The virtual lawn surface 605 may correspond to a real-world lawn of a first user. For example, a first user's virtual reality lawn may be rendered to look similar to the first user's real-world lawn based on images, video, map data, and/or other data of the first user's real-world lawn.

FIG. 6A illustrates an example of a virtual lawn surface 605 that corresponds to a real-world lawn of a first user. The virtual lawn surface 605 may include various types of grass, grass lengths, grass cluster thickness, or the like. In some instances, the virtual lawn surface 605 may include additional lawn features, such as a lawn boundary, bushes, shrubbery, flowers, gardens, paths, fences, pools, or any other objects or items found on a lawn. In some instances, the virtual lawn surface 605 is displayed without any lawn pattern (as shown in FIG. 6A) or with a default lawn pattern (e.g., vertical rows, horizontal rows, etc.).

At block 505, a first external device 115 may receive a user input of a selected lawn pattern. In some instances, the user input at least one of (i) selects the selected lawn pattern from a plurality of predetermined lawn patterns and (ii) generates the selected lawn pattern that includes a user-customized lawn pattern. In some instances, the plurality of predetermined lawn patterns include horizontal lines in the lawn, vertical lines in the lawn, diagonal lines in the lawn, one or more spirals in the lawn, a design such as a letter or a number in the lawn, and/or the like. In some instances, the user-customized lawn pattern includes a customized path for the robotic garden tool 105 to traverse that may be, for example, drawn on a touch screen display (e.g., the second display 325 of the first external device 115) by the user as the user input.

In some instances, lawn pattern information is associated with the selected lawn pattern. The lawn pattern information corresponding to the selected lawn pattern may include a predetermined travel path of the robotic garden tool 105. For example, a horizontal line lawn pattern 610 (as shown in FIG. 6B) may be associated with lawn pattern information that includes instructions for the robotic garden tool 105 to travel in a first horizontal straight line until a virtual boundary is reached and then turn around to travel in another horizontal straight line parallel to the first horizontal straight line until another virtual boundary is reached. This process may repeat until the entire lawn has been covered, for example, as determined by the robotic garden tool 105 using odometry, mapping, location tracking, and/or the like. As another example, a custom lawn pattern may be associated with lawn pattern information that includes instructions for the robotic garden tool 105 to travel according to a path drawn by the user on the touch screen display. In some instances, the predetermined travel path included in the lawn pattern information may include at least one of repeated horizontal lines, repeated vertical lines, repeated diagonal lines, and circular movement with a gradually increasing radius.

In some instances, the lawn pattern information indicates one or more operations of the robotic garden tool 105 or functions of the robotic garden tool 105 during an operation that should change at one or more points along the predetermined travel path. In other words, operations/functions of the robotic garden tool 105 may be adjusted as the robotic garden tool 105 moves along a predetermined travel path to generate the selected lawn pattern in the real-world lawn. For example, the operation/function of the robotic garden tool 105 that may be adjusted as the robotic garden tool 105 moves along the predetermined travel path includes at least one of a cutting blade height, a cutting blade speed (including whether the cutting blade assembly motor 240 is activated/deactivated (i.e., on/off)), a cutting blade sheer angle, a traverse/travel speed of the robotic garden tool 105, whether an edge/perimeter cutting device is activated/deactivated, and/or the like. For example, the lawn pattern information may indicate that the robotic garden tool 105 is to activate the cutting blade assembly motor 240 to mow the lawn when traveling west along a horizontal straight line and that the cutting blade assembly motor 240 should be deactivated when traveling east along a horizontal straight line such that the lawn is only mowed when the robotic garden tool 105 is moving in a single direction. As another example, the height of the cutting blade assembly 135 may be set to be higher or lower at different portions of the predetermined travel path to produce the selected lawn pattern in the lawn and/or to account for areas of the lawn where the grass may grow thicker than in other areas of the lawn.

In some instances, the user input received at block 505 selects or establishes the predetermined travel path of the robotic garden tool 105. In some instances, the user input additionally selects different points/portions of the predetermined travel path during which operations/functions of the robotic garden tool 105 should be controlled differently. For example, a pop-up menu may be displayed on the second display 325 that allows the user to select from a plurality of lawn patterns or create their own lawn pattern, for example, by dragging their finger on the touch screen (i.e., second display 325). In response to the lawn pattern being created or generated, the predetermined travel path may be shown on the virtual lawn surface 605. In response to receiving a user input that selects a point/portion of the predetermined travel path, the second electronic processor 305 may display a second pop-up menu on the second display 325 that includes user-selectable operations/functions at the selected point/portion of the predetermined path. The second pop-up menu may allow the user to select specifically how the robotic garden tool 105 operates during the selected point/portion of the predetermined travel path. For example, the user may specify points at which the cutting blade assembly motor 240 should switch from activated to deactivated (and vice versa), points at which the cutting blade assembly 135 should be raised or lowered, and/or the like.

Based on the totality of the user inputs/selections, the second electronic processor 305 may determine a virtual representation 605 of a lawn surface. In some instances, at block 510, the second electronic processor 305 generates, on the second display 325 of the first external device 115, a three-dimensional representation (or a two-dimensional representation or another type of visual representation) of a lawn surface based on the selected lawn pattern. FIG. 6B illustrates a two-dimensional representation 605 of the lawn surface when the user input received at block 505 selects a horizontal line lawn pattern 610 as the selected lawn pattern. As indicated by the above explanation, the external device 115 may be configured to allow user customization of a lawn pattern (e.g., including grass length, grass cut pattern, etc.) of the virtual lawn surface 605. The customized lawn pattern may be referred to as a selected lawn pattern as indicated previously herein.

At block 515, the second electronic processor 305 stores, in the second memory 310, lawn pattern information corresponding to the selected lawn pattern. As explained previously herein with respect to block 505, the lawn pattern information may indicate, among other things, a predetermined travel path of the robotic garden tool 105 and one or more operations/functions of the robotic garden tool 105 that should change at one or more points along the predetermined travel path. The lawn pattern information may also indicate how a selected lawn pattern should be rendered/displayed in a virtual reality environment. Once a user has selected the selected lawn pattern, as noted previously herein, the user may desire that their real-world lawn is mowed in a similar lawn pattern as the selected lawn pattern. The user also may desire that their virtual lawn surface 605 (including the selected lawn pattern) is updated within a virtual reality environment that is viewable by at least one other user of the virtual reality environment. In some embodiments, the user may select, via a second user input on the first external device 115, whether their real-world lawn is mowed in a similar lawn pattern as the selected lawn pattern and/or whether their virtual lawn surface 605 is updated within the virtual reality environment to be viewable by other users. These two selections may be separately selectable by the user via separate user inputs.

At block 520, the second electronic processor 305 may transmit, via the second network interface 315, the lawn pattern information to at least one of a server device 150 and the robotic garden tool 105. In some embodiments, the transmission may occur based on the second user input(s) that indicates how the user prefers that the selected lawn pattern be used. For example, to control their robotic garden tool 105 to mow their real-world lawn in a similar lawn pattern as the selected lawn pattern, the external device 115 transmits the lawn pattern information corresponding to the selected lawn pattern to the robotic garden tool 105. As another example, to allow their virtual lawn 605 to be updated within a virtual reality environment to be viewable by other users, the external device 115 transmits the lawn pattern information to the server device 150.

At block 525, the third electronic processor 405 of the server device 150 receives, via the third network interface 415, the lawn pattern information from the first external device 115. In some embodiments, the lawn pattern information is transmitted directly from the first external device 115 to the robotic garden tool 105 (in situations where the lawn pattern information is transmitted to the robotic garden tool 105). In some embodiments, the server device 150 transmits, via the third network interface 415, the lawn pattern information to the robotic garden tool 105 after receiving the lawn pattern information from the first external device 115.

At block 530, the third electronic processor 405 may store, with the third memory 410, the lawn pattern information received from the first external device 115. By storing the lawn pattern information at the server device 150, the lawn pattern information may be accessible to other external devices 115 that request or otherwise receive information regarding a virtual reality environment.

At block 535, the third electronic processor 405 transmits, with the third network interface 415, the lawn pattern information to a second external device 115. In some instances, the first external device 115 is associated with and operated by a first user, and the second external device 115 is associated with and operated by a second user different than the first user. In some instances, the lawn pattern information is transmitted to the second external device 115 for display of the three-dimensional representation (or two-dimensional representation 605) of the lawn surface including the selected lawn pattern (e.g., horizontal line lawn pattern 610) based on the lawn pattern information. In other words, the second external device 115 may be configured to display, on a second display 325 of the second external device 115 and based on the lawn pattern information, the three-dimensional representation (or two-dimensional representation 605) of the lawn surface corresponding to the selected lawn pattern (e.g., horizontal line lawn pattern 610) selected on the first external device 115 by the first user. In some instances, the three-dimensional representation (or two-dimensional representation 605) of the lawn surface displayed on the second display 325 of the second external device 115 is displayed in a virtual reality environment. Accordingly, other external devices 115 may display the virtual reality lawn of the first user that has the selected lawn pattern in a virtual reality environment to be viewed by other users that share/participate in the virtual reality environment.

At block 540, the first electronic processor 205 of the robotic garden tool 105 receives, via the first network interface 215, the lawn pattern information from the first external device 115 (and/or from the server device 150). At block 545, the first electronic processor 205 of the robotic garden tool 105 stores the lawn pattern information in the first memory 210.

At block 550, the first electronic processor 205 of the robotic garden tool 105 may control an operation of the robotic garden tool 105 on the first user's real-world lawn based on the lawn pattern information to generate the selected lawn pattern on the real-world lawn. For example, the next time that the robotic garden tool 105 is scheduled to operate, the robotic garden tool 105 may operate according to the lawn pattern information that may include a predetermined travel path of the robotic garden tool 105 and one or more operations/functions of the robotic garden tool 105 that should change at one or more points along the predetermined travel path. As explained previously herein, the operation of the robotic garden tool 105 that may be controlled by the lawn pattern information includes at least one of a cutting blade height, a cutting blade speed, a cutting blade sheer angle, a traverse/travel speed, a travel distance, and a travel path.

In some instances, the robotic garden tool 105 executes a combination of controls, such as cutting a grass length to a first height for a first travel distance, then cutting a grass length to a second height for a second travel distance. In some instances, the robotic garden tool 105 may perform a grass cutting operation over a first travel distance of the lawn surface, but only in one travel direction. For example, the robotic garden tool 105 may cut the lawn surface only in a north direction but not in a south direction. The robotic garden tool 105 may be configured to cut the lawn following straight lines, curved lines, an orbital travel path, an angled travel path, a concentric travel path, or any combination of travel paths. For example, the robotic garden tool 105 may cut the lawn in straight lines for a first distance in a north direction, and then cut the lawn at a different cut height following a concentric circle pattern for a second distance. Other example embodiments may include any combination of lawn pattern or grass cut length.

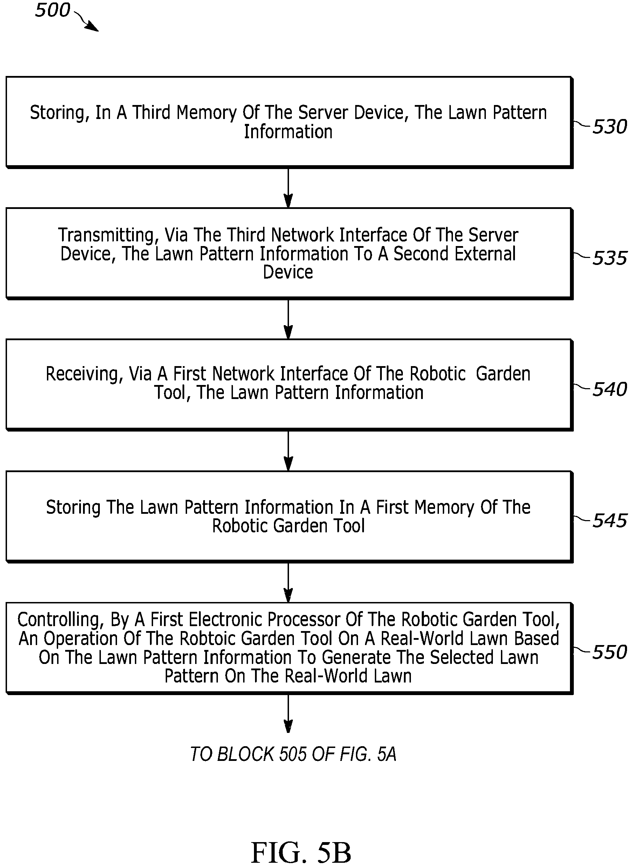

By executing the method 500, the first user's real-world lawn may be groomed such that the real-world lawn has a similar lawn pattern as the first user's virtual reality lawn. As indicated in FIGS. 5A and 5B, after executing block 550, the method 500 may proceed back to block 505 to allow the user to modify the selected lawn pattern of their virtual reality lawn and/or their real-world lawn.

Additionally, there may be a further link between real-world operation of the robotic garden tool 105 and the virtual reality environment by the external device 115 displaying a real-time location of the robotic garden tool 105 on the virtual lawn surface 605 as the robotic garden tool 105 operates on the real-world lawn. In other words, the virtual lawn surface 605 may be configured to be consistent with an additional real-world dimension (i.e., a fourth dimension) such as time. For example, at least one component/characteristic associated with the virtual lawn surface 605 may be updated in real-time as the at least one component/characteristic changes in the real-world lawn. For example, as the robotic garden tool 105 traverses on the real-world lawn, the robotic garden tool 105 may periodically/continuously transmit its location to the first external device 115. The first external device 115 may then render the virtual lawn surface 605 such that a virtual instance 615 of the robotic garden tool 105 is displayed in the same location and with the same orientation on the virtual lawn surface 605 as the location of the real-world robotic garden tool 105 on the real-world lawn. Accordingly, the first external device 115 may display a progress/status of an operation being performed by the robotic garden tool 105 (e.g., a location and orientation of the robotic mower 105 on the lawn, a percentage complete progress, a remaining time indicator, an indication of areas already mowed versus areas still to be mowed, etc.). In some instances, the second electronic processor 305 also displays a virtual instance 620 of the docking station 110 on the virtual lawn surface 605. A default position of the robotic garden tool 105 (and therefore a default position of the virtual instance 615 of the robotic garden tool 105) may be at the docking station 110.

While the description of the method 500 focuses primarily on the example of mowing a lawn, the method 500 may be similarly applied in other situations. For example, the method 500 may be similarly applied to painting a design on a lawn or on another surface in the real-world and in the virtual reality environment. In this example, the lawn pattern information may indicate a travel path of the robotic garden tool 105 as well as time periods/locations during which the robotic garden tool 105 should output one or more colors of paint in accordance with a selected lawn pattern that includes a design to be painted.

Accordingly, various implementations of the systems and methods described herein provide, among other things, techniques for the control of power tools. Other features and advantages of the invention are set forth in the following claims.

In the foregoing specification, specific examples have been described. However, one of ordinary skill in the art appreciates that various modifications and changes may be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, in this document relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus.

An element proceeded by "comprises ... a," "has ... a," "includes ... a," or "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about," or any other version thereof, are defined as being close to as understood by one of ordinary skill in the art, and in one non-limiting example the term is defined to be within 10%, in another example within 5%, in another example within 1% and in another example within 0.5%. The term "coupled" as used herein is defined as connected, although not necessarily directly and not necessarily mechanically. A device or structure that is "configured" in a certain way is configured in at least that way but may also be configured in ways that are not listed.

## Claims

1. A communication system comprising:
a robotic garden tool including a first electronic processor, a first memory, and a first network interface;
a first external device, the first external device including a display, a second electronic processor, a second memory, and a second network interface, the second electronic processor configured to
receive a user input of a selected lawn pattern,
generate, on the display of the first external device, a three-dimensional representation of a lawn surface based on the selected lawn pattern,
store, in the second memory, lawn pattern information corresponding to the selected lawn pattern, and
transmit, via the second network interface, the lawn pattern information to a server device and to the robotic garden tool; and
the server device, the server device including a third electronic processor, a third memory, and a third network interface, the third electronic processor configured to
receive, via the third network interface, the lawn pattern information from the first external device,
store, with the third memory, the lawn pattern information, transmit, with the third network interface, the lawn pattern information to a second external device;
wherein the first electronic processor of the robotic garden tool is configured to
receive, via the first network interface, the lawn pattern information from the first external device,
store the lawn pattern information in the first memory, and
control an operation of the robotic garden tool on a real-world lawn based on the lawn pattern information to generate the selected lawn pattern on the real-world lawn.

2. The communication system of claim 1, wherein the server device transmits, via the third network interface, the lawn pattern information to the robotic garden tool.

3. The communication system of claim 1, wherein the operation of the robotic garden tool includes at least one of a cutting blade height, a cutting blade speed, a cutting blade sheer angle, a traverse speed, a travel distance, a travel path, and combinations thereof.

4. The communication system of claim 1, wherein the user input at least one of:
selects the selected lawn pattern from a plurality of predetermined lawn patterns; and
generates the selected lawn pattern, wherein the selected lawn pattern includes a user-customized lawn pattern.

5. The communication system of claim 1, wherein the lawn pattern information corresponding to the selected lawn pattern includes a predetermined travel path of the robotic garden tool.

6. The communication system of claim 5, wherein the predetermined travel path of the robotic garden tool includes at least one of repeated horizontal lines, repeated vertical lines, repeated diagonal lines, and circular movement with a gradually increasing radius.

7. The communication system of claim 5, wherein the lawn pattern information indicates that the operation of the robotic garden tool should change at one or more points along the predetermined travel path.

8. The communication system of claim 1, wherein the first external device is associated with and operated by a first user, and the second external device is associated with and operated by a second user different than the first user; and
wherein the second external device is configured to display, on a second display of the second external device and based on the lawn pattern information, the three-dimensional representation of the lawn surface corresponding to the selected lawn pattern selected on the first external device by the first user;
and optionally
wherein the three-dimensional representation of the lawn surface displayed on the second display of the second external device is displayed in a virtual reality environment.

9. A method of controlling operation of a robotic garden tool, the method comprising:
receiving, with a first external device, a user input of a selected lawn pattern;
generating, on a display of the first external device and with a second electronic processor of the first external device, a three-dimensional representation of a lawn surface based on the selected lawn pattern,
storing, in a second memory of the first external device, lawn pattern information corresponding to the selected lawn pattern;
transmitting, via a second network of the first external device, the lawn pattern information to a server device and to the robotic garden tool;
receiving, via a third network interface of the server device, the lawn pattern information;
storing, in a third memory of the server device, the lawn pattern information;
transmitting, via the third network interface of the server device, the lawn pattern information to a second external device;
receiving, via a first network interface of the robotic garden tool, the lawn pattern information;
storing the lawn pattern information in a first memory of the robotic garden tool; and
controlling, by a first electronic processor of the robotic garden tool, an operation of the robotic garden tool on a real-world lawn based on the lawn pattern information to generate the selected lawn pattern on the real-world lawn.

10. The method of claim 9, further comprising transmitting, via the third network interface of the server device, the lawn pattern information to the robotic garden tool.

11. The method of claim 9, wherein controlling the operation of the robotic garden tool includes controlling at least one of a cutting blade height, a cutting blade speed, a cutting blade sheer angle, a traverse speed, a travel distance, a travel path, and combinations thereof.

12. The method of claim 9, wherein receiving the user input of the selected lawn pattern includes at least one of:
receiving the selected lawn pattern from a plurality of predetermined lawn patterns;
and
generating, with the second electronic processor, the selected lawn pattern based on the user input, wherein the selected lawn pattern includes a user-customized lawn pattern.

13. The method of claim 9, wherein the lawn pattern information corresponding to the selected lawn pattern includes a predetermined travel path of the robotic garden tool;
and optionally
wherein the predetermined travel path of the robotic garden tool includes at least one of repeated horizontal lines, repeated vertical lines, repeated diagonal lines, and circular movement with a gradually increasing radius;
and optionally
wherein the lawn pattern information indicates that the operation of the robotic garden tool should change at one or more points along the predetermined travel path.

14. The method of claim 9, wherein the first external device is associated with and operated by a first user, and the second external device is associated with and operated by a second user different than the first user, and further comprising:
displaying, on a second display of the second external device and based on the lawn pattern information, the three-dimensional representation of the lawn surface corresponding to the selected lawn pattern selected on the first external device by the first user;
and optionally
wherein the three-dimensional representation of the lawn surface displayed on the second display of the second external device is displayed in a virtual reality environment.

15. A communication system comprising:
a robotic garden tool including a first electronic processor, a first memory, and a first network interface; and
a first external device, the first external device including a display, a second electronic processor, a second memory, and a second network interface, the second electronic processor configured to
receive a user input of a selected lawn pattern,
generate, on the display of the first external device, a three-dimensional representation of a lawn surface based on the selected lawn pattern,
store, in the second memory, lawn pattern information corresponding to the selected lawn pattern, and
transmit, via the second network interface, the lawn pattern information to the robotic garden tool;
wherein the first electronic processor of the robotic garden tool is configured to
receive, via the first network interface, the lawn pattern information from the first external device,
store the lawn pattern information in the first memory, and
control an operation of the robotic garden tool on a real-world lawn based on the lawn pattern information to generate the selected lawn pattern on the real-world lawn;
and optionally
further comprising a server device including a third electronic processor, a third memory, and a third network interface;
wherein the second electronic processor of the first external device is configured to transmit, via the second network interface, the lawn pattern information to the server device; and
wherein the third electronic processor of the server device is configured to transmit, via the third network interface, the lawn pattern information to a second external device for display of the three-dimensional representation of the lawn surface including the selected lawn pattern based on the lawn pattern information.
